(19) **Europäisches Patentamt**
**European Patent Office**
**Office européen des brevets**

(11) **EP 1 865 348 A2**

(12) **DEMANDE DE BREVET EUROPEEN**

(43) Date de publication:
**12.12.2007 Bulletin 2007/50**

(51) Int Cl.:
***G02B 6/036*** *(2006.01)*

(21) Numéro de dépôt: **07018781.0**

(22) Date de dépôt: **19.12.2003**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **24.12.2002 FR 0216616**

(62) Numéro(s) de document de la (des) demande(s) initiale(s) en application de l'article 76 CBE:
**03293230.3 / 1 434 071**

(71) Demandeur: **Draka comteq B.V.**
**1083 HJ Amsterdam (NL)**

(72) Inventeurs:
• **De Montmorillon, Louis-Anne**
**75017 Paris (FR)**
• **Fleury, Ludovic**
**78390 Bois d'Arcy (FR)**

• **Sillard, Pierre**
**78150 Le Chesnay (FR)**
• **Beaumont, Florent**
**78700 Confians sainte Honorine (FR)**
• **Gorlier, Maxime**
**75008 Paris (FR)**
• **Molin, Denis**
**78150 Le Chesnay (FR)**
• **Nouchi, Pascale**
**78600 Maisons-Lafitte (FR)**

(74) Mandataire: **Dohmen, Johannes Maria Gerardus et al**
**Algemeen Octrooi- en Merkenbureau**
**P.O. Box 645**
**5600 AP Eindhoven (NL)**

Remarques:
Cette demande a été déposée le 25.09.2007 comme demande divisionnaire de la demande mentionnée sous le code INID 62.

(54) **Fibre optique à compensation de dispersion chromatique dans la bande S**

(57) L'invention concerne le domaine des fibres optiques pour réseau de transmission à multiplexage en longueur d'onde. C'est une fibre optique à compensation de dispersion chromatique dans la bande S s'étendant de 1460nm à 1530nm, présentant une dispersion négative à la longueur de 1495nm, comportant un coeur étant constitué d'une tranche centrale, d'une tranche très enterrée et d'une tranche annulaire, et puis une gaine, et présentant de préférence, à longueur d'onde de 1495nm, un rapport dispersion chromatique sur pente de dispersion chromatique dont la valeur absolue est comprise entre 68nm et 158nm.

FIG_1

## Description

L'invention concerne le domaine des fibres optiques pour réseau de transmission à multiplexage en longueur d'onde.

L'augmentation des débits d'information sur ce type de réseau impose une compensation de la dispersion chromatique et de la pente de dispersion sur d'autres bandes spectrales que la bande C. La bande dite S correspond à une bande spectrale allant approximativement de 1460nm à 1530nm. La bande dite C correspond à une bande spectrale allant approximativement de 1530nm à 1565nm. La bande dite L correspond à une bande spectrale allant approximativement de 1565nm à 1625nm. La bande dite U correspond à une bande spectrale allant approximativement de 1625nm à 1675nm. La bande spectrale la plus couramment utilisée est la bande C. L'invention s'intéresse aux fibres de compensation de la dispersion chromatique dans la bande S.

Dans l'art antérieur, il est connu d'associer certains types de fibres optiques à dispersion décalée réduisant les effets non-linéaires croisés (« non-zero dispersion shifted fiber » en terminologie anglo-saxonne correspondant à l'abréviation NZ-DSF) à des fibres de compensation de dispersion (« dispersion compensating fiber » en terminologie anglo-saxonne correspondant à l'abréviation DCF), ce qui permet d'obtenir une ligne de transmission dont la dispersion est nulle sur une large plage spectrale.

Selon un premier art antérieur par exemple décrit dans la demande de brevet EP 1219986, il est connu d'utiliser une fibre optique à compensation de dispersion chromatique en bande S, mais les exemples à 2 ou 3 tranches présentés, soit ont un rapport entre l'atténuation à 1520nm et celle à 1500nm supérieur à un facteur 2, soit ont un rapport entre dispersion chromatique et pente de dispersion chromatique qui les rend inadaptées pour l'objet de l'invention.

La demande de brevet US 2002/0067903 décrit une fibre optique à compensation de dispersion chromatique dans le bande S de 1460nm à 1530nm pour réseau de transmission à multiplexage en longueur d'onde, présentant une dispersion chromatique négative à la longueur d'onde de 1495nm, comportant successivement du centre vers la périphérie un coeur présentant un profile d'indice variable puis une gaine d'indice constant. Le profil d'indice variable du coeur comporte successivement, du centre vers la périphérie, une tranche centrale d'indice maximum supérieur à l'indice de la gaine, une tranche enterrée d'indice minimum inférieur à l'indice de la gaine, une tranche annulaire d'indice maximum supérieur à l'indice de la gaine et inférieur à l'indice maximum de la tranche centrale.

Ces fibres optiques comportent une tranche centrale présentant la différence entre l'indice maximum supérieur à l'indice de la gaine et l'indice de la gaine étant comprise entre $16x10^{-3}$ et $25x10^{-3}$, le rayon de la partie de la tranche centrale présentant un indice supérieur à l'indice de la gaine étant compris entre $1,3\mu m$ et $2,3\mu m$, une tranche enterrée présentant la différence entre l'indice minimum inférieur à l'indice de la gaine et l'indice de la gaine étant comprise entre $-9x10^{-3}$ et $-3x10^{-3}$, le rayon extérieur de cette tranche enterrée étant comprise entre $3,7\mu m$ et $6\mu m$, et une tranche annulaire présentant la différence entre l'indice maximum supérieur à l'indice de la gaine et inférieur à l'indice maximum de la tranche centrale étant comprise entre $3x10^{-3}$ et $11x10^{-3}$, le rayon extérieur de cette tranche annulaire étant compris entre $6,6\mu m$ et $8,3\mu m$.

Modes de réalisation de ces fibres optiques présentent la valeur de l'intégrale entre un rayon nul et le rayon de la partie de la tranche centrale présentant un indice supérieur à l'indice de la gaine, de la différence d'indice par rapport à la gaine étant comprise entre $28x10^{-3}\mu m$ et $34x10^{-3}\mu m$.

Ces fibres optiques à compensation de dispersion chromatique présentent un rapport entre la dispersion chromatique et la pente de dispersion étant compris entre 170nm et 230nm à une longueur d'onde de 1495nm.

L'invention propose une fibre optique à compensation de dispersion chromatique qui, grâce à des profils à trois tranches présentant des structures correspondant à des plages particulières d'indice et de rayon, permet une compensation efficace en bande S de la dispersion chromatique d'une certaine gamme de fibres optiques de ligne, tout en conservant des atténuations à 1500nm et à 1520nm qui soient comparables.

Selon l'invention, il est prévu, une fibre optique à compensation de dispersion chromatique dans la bande S s'étendant de 1460nm à 1530nm,

pour réseau de transmission à multiplexage en longueur d'onde,

présentant une dispersion chromatique négative à la longueur d'onde de 1495nm,

comportant successivement du centre vers la périphérie un coeur présentant un profil d'indice variable puis une gaine d'indice constant,

le profil d'indice variable du coeur étant constitué successivement, du centre vers la périphérie,

d'une tranche centrale d'indice maximum supérieur à l'indice de la gaine, d'une tranche enterrée d'indice minimum inférieur à l'indice de la gaine,

d'une tranche annulaire d'indice maximum supérieur à l'indice de la gaine et inférieur à l'indice maximum de la tranche centrale,

la différence ($\Delta n_1$) entre l'indice maximum de la tranche centrale et l'indice de la gaine étant comprise entre $11,5x10^{-3}$ et $20,0x10^{-3}$,

le rayon ($r_1$) de la partie de la tranche centrale présentant un indice supérieur à l'indice de la gaine étant compris entre $1,6\mu m$ et $2,6\mu m$,

la différence ($\Delta n_2$) entre l'indice minimum de la tranche enterrée et l'indice de la gaine étant comprise entre $-10,0x10^{-3}$ et $-7,0x10^{-3}$,

le rayon extérieur ($r_2$) de la tranche enterrée étant com-

pris entre 4,5 $\mu$m et 6,5 $\mu$m,
la différence ($\Delta n_3$) entre l'indice maximum de la tranche annulaire et l'indice de la gaine étant comprise entre $1,0\times10^{-3}$ et $8,0\times10^{-3}$,
le rayon extérieur ($r_3$) de la tranche annulaire étant compris entre 7,3$\mu$m et 10,2$\mu$m,
la valeur de l'intégrale

$$S_{01} = \int_{0}^{r_1} \Delta n(r).dr$$

entre un rayon nul et le rayon ($r_1$) de la partie de la tranche centrale présentant un indice supérieur à l'indice de la gaine, de la différence d'indice par rapport à la gaine, étant comprise entre $28\times10^{-3}\mu$m et $34\times10^{-3}\mu$m,
caractérisée en ce que
la valeur de l'intégrale

$$S_{12} = \int_{r_1}^{r_2} \Delta n(r).dr$$

entre le rayon ($r_1$) de la partie de la tranche centrale présentant un indice supérieur à l'indice de la gaine et le rayon ($r_2$) de la partie de la tranche enterrée présentant un indice inférieur à l'indice de la gaine, de la différence d'indice par rapport à la gaine, est comprise entre $-42\times10^{-3}\mu$m et $-22\times10^{=3}\mu$m,
les rayons et les indices de chacune des tranches étant déterminés de manière à ce que la fibre optique à compensation de dispersion présente, à la longueur d'onde de 1495nm, un rapport dispersion chromatique sur pente de dispersion chromatique dont la valeur absolue est comprise entre 68nm et 158nm.

Un aspect particulièrement important est le caractère très enterré de l'indice de la tranche enterrée par rapport à l'indice de la tranche centrale. La profondeur d'enterrement de cette tranche très enterrée par rapport à la hauteur de la tranche centrale est une caractéristique avantageuse importante qui permet d'obtenir plus aisément une bonne compensation en bande S, aussi bien de la dispersion chromatique que de la pente de dispersion chromatique sans dégrader notablement les autres propriétés de la fibre optique à compensation de dispersion chromatique.

La tranche centrale est de préférence en forme de rectangle, mais elle peut aussi être en forme de trapèze ou de triangle ou en alpha. Les autres tranches sont de préférence en forme de rectangle, mais elles peuvent aussi être par exemple en forme de trapèze ou de triangle ou en alpha.

De préférence, les rayons et les indices de chacune des tranches sont déterminés de manière à ce que la fibre optique à compensation de dispersion présente, à la longueur d'onde de 1495nm, un rapport dispersion chromatique sur pente de dispersion chromatique dont la valeur absolue est comprise entre 80nm et 118nm. Avantageusement, les rayons et les indices de chacune des tranches sont déterminés de manière à ce que la fibre optique à compensation de dispersion présente, à la longueur d'onde de 1495nm, un rapport dispersion chromatique sur pente de dispersion chromatique dont la valeur absolue est comprise entre 87nm et 105nm.

Selon l'invention, il est encore prévu une fibre optique à compensation de dispersion chromatique dans la bande S s'étendant de 1460nm à 1530nm, pour réseau de transmission à multiplexage en longueur d'onde, présentant une dispersion chromatique négative à la longueur d'onde de 1495nm, comportant successivement du centre vers la périphérie un coeur présentant un profil d'indice variable puis une gaine d'indice constant, le profil d'indice variable du coeur comportant successivement, du centre vers la périphérie, une tranche centrale d'indice maximum supérieur à l'indice de la gaine, une tranche enterrée d'indice minimum inférieur à 'indice de la gaine, une tranche annulaire d'indice maximum supérieur à l'indice de la gaine et inférieur à l'indice maximum de la tranche centrale, la valeur absolue de l'indice minimum de la tranche enterrée étant supérieure ou égale à 60% de la valeur absolue de l'indice maximum de la tranche centrale. De préférence, la valeur absolue de l'indice minimum de la tranche enterrée est inférieure ou égale à 90% de la valeur absolue de l'indice maximum de la tranche centrale.

La fibre optique à compensation de dispersion selon l'invention est associée à une fibre optique de ligne dans un système de transmission à fibre optique. Dans une forme de réalisation, le système de transmission à fibre optique comprend l'association d'une fibre optique de ligne et d'une fibre optique à compensation de dispersion selon l'invention en ligne. Dans une autre forme de réalisation, le système de transmission à fibre optique comprend l'association d'une fibre optique de ligne et d'une fibre optique à compensation de dispersion selon l'invention en module.

Afin d'améliorer la qualité de la compensation de la dispersion chromatique dans la bande S de la fibre optique de ligne ainsi que les autres propriétés de la fibre optique à compensation de dispersion chromatique selon l'invention, un certain nombre des plages ou de relations préférentielles notamment pour les indices et les rayons du type de profil d'indice du coeur à trois tranches vont maintenant être données.

De préférence, la valeur du double de l'intégrale

$$T_{01} = 2.\int_{0}^{r_1} \Delta n(r).r.dr$$

entre un rayon nul et le rayon (r$_1$) de la partie de la tranche centrale présentant un indice supérieur à l'indice de la gaine, du produit de la différence d'indice par rapport à la gaine par le rayon, est comprise entre 51x10$^{-3}$ $\mu$m$^2$ et 79x10$^{-3}$ $\mu$m$^2$.

De préférence, la valeur du double de l'intégrale

$$T_{12} = 2. \int_{r_1}^{r_2} \Delta n(r).r.dr$$

entre le rayon (r$_1$) de la partie de la tranche centrale présentant un indice supérieur à l'indice de la gaine et le rayon (r$_2$) de la partie de la tranche enterrée présentant un indice inférieur à l'indice de la gaine, du produit du rayon par la différence d'indice par rapport à la gaine, est comprise entre -350x10$^{-3}$ et -160×10$^{-3}$ $\mu$m$^2$.

De préférence, la valeur de l'intégrale

$$S_{23} = \int_{r_2}^{r_3} \Delta n(r).dr$$

entre le rayon (r$_2$) de la partie de la tranche enterrée présentant un indice inférieur à l'indice de la gaine et le rayon (r$_3$) de la partie de la tranche annulaire présentant un indice supérieur à l'indice de la gaine, de la différence d'indice par rapport à la gaine, est comprise entre 5x10$^{-3}$ et 15x10$^{-3}$ $\mu$m.

De préférence, la valeur du double de l'intégrale

$$T_{23} = 2. \int_{r_2}^{r_3} \Delta n(r).r.dr$$

entre le rayon (r$_2$) de la partie de la tranche enterrée présentant un indice inférieur à l'indice de la gaine et le rayon (r$_3$) de la partie de la tranche annulaire présentant un indice supérieur à l'indice de la gaine, du produit du rayon par la différence d'indice par rapport à la gaine, est comprise entre 70x10$^{-3}$ et 207x10$^{-3}$ $\mu$m$^2$.

De préférence, la valeur de l'intégrale

$$S_{03} = \int_{0}^{r_3} \Delta n(r).dr$$

entre un rayon nul et le rayon (r$_3$) de la partie de la tranche annulaire présentant un indice supérieur à l'indice de la gaine, de la différence d'indice par rapport à la gaine, est comprise entre 2,8x10$^{-3}$ et 18,2x10$^{-3}$ $\mu$m.

De préférence, la valeur du double de l'intégrale

$$T_{03} = 2. \int_{0}^{r_3} \Delta n(r).r.dr$$

entre un rayon nul et le rayon (r$_3$) de la partie de la tranche annulaire présentant un indice supérieur à l'indice de la gaine, du produit du rayon par la différence d'indice par rapport à la gaine, est comprise entre -108x10$^{-3}$ et 57x10$^{-3}$ $\mu$m$^2$.

De préférence, la valeur du double de l'intégrale

$$U_{03} = 2. \int_{0}^{r_3} \Delta n(r).\exp\left(\frac{-r^2}{a^2}\right).r.dr$$

entre un rayon nul et le rayon (r$_3$) de la partie de la tranche annulaire présentant un indice supérieur à l'indice de la gaine, du produit du rayon par la différence d'indice par rapport à la gaine par la fonction exp(-r$^2$/a$^2$), avec a = 1,58 $\mu$m, est comprise entre 24,4x10$^{-3}$ et 28,5x10$^{-3}$ $\mu$m$^2$.

L'invention sera mieux comprise et d'autres particularités et avantages apparaîtront à l'aide de la description ci-après et des dessins joints, donnés à titre d'exemples, où :

la figure 1 représente schématiquement un exemple de type de profil à quatre tranches d'une fibre optique à compensation de dispersion chromatique selon l'invention;
la figure 2 représente un tableau comprenant les valeurs de rayons et de différences d'indice pour une dizaine d'exemples de profils à trois tranches d'une fibre optique à compensation de dispersion chromatique ;
la figure 3 représente un tableau comprenant certaines caractéristiques des profils de fibre optique à compensation de dispersion chromatique selon l'invention définis à la figure 2 ;
la figure 4 représente un tableau comprenant d'autres caractéristiques des profils de fibre optique à compensation de dispersion chromatique selon l'invention définis à la figure 2

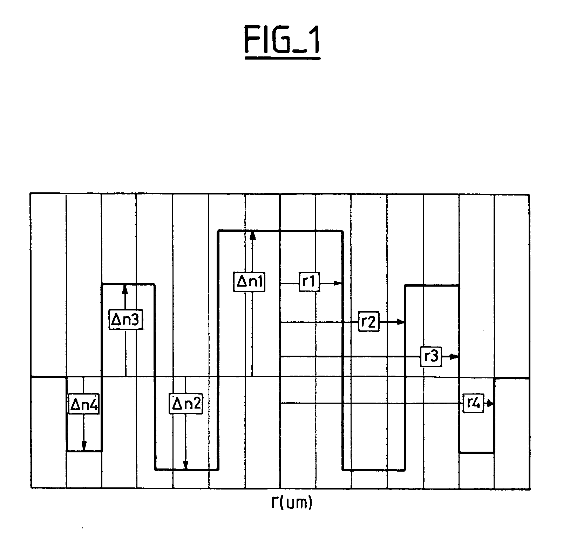

La figure 1 représente schématiquement un exemple de type de profil à quatre tranches d'une fibre optique à compensation de dispersion chromatique. La première tranche appelée tranche centrale présente une différence maximale d'indice $\Delta n_1$ avec l'indice constant de la gaine et un rayon extérieur r$_1$. La différence d'indice maximale $\Delta n_1$ est positive. De préférence, entre un rayon nul et le rayon r$_1$, l'indice est constant. La deuxième tranche appelée première tranche enterrée présente une différence maximale d'indice $\Delta n_2$ avec l'indice constant de la gaine et un rayon extérieur $r_2$. La différence d'indice maximale $\Delta n_2$ est négative. De préférence, entre le rayon $r_1$ et le rayon $r_2$, l'indice est constant. La troisième tranche appelée tranche annulaire présente une différence maximale d'indice $\Delta n_3$ avec l'indice constant de la gaine et un rayon extérieur $r_3$. La différence d'indice maximale $\Delta n_3$ est positive. De préférence, entre le rayon $r_2$ et le rayon $r_3$, l'indice est constant. La quatrième tranche appelée deuxième tranche enterrée présente une différence maximale d'indice $\Delta n_4$ avec l'indice constant de la gaine et un rayon extérieur $r_4$. La différence d'indice maximale $\Delta n_4$ est négative. De préférence, entre le rayon $r_3$ et le rayon $r_4$, l'indice est constant. Au-delà du rayon $r_4$ se trouve la gaine d'indice constant.

Un exemple de type de profil à trois tranches d'une fibre optique à compensation de dispersion chromatique selon l'invention correspond également à la figure 1 pour laquelle $\Delta n_4 = 0$ et $r_4 = r_3$. Dans ce cas la deuxième tranche enterrée n'existe pas et la première tranche enterrée est tout simplement appelée tranche enterrée.

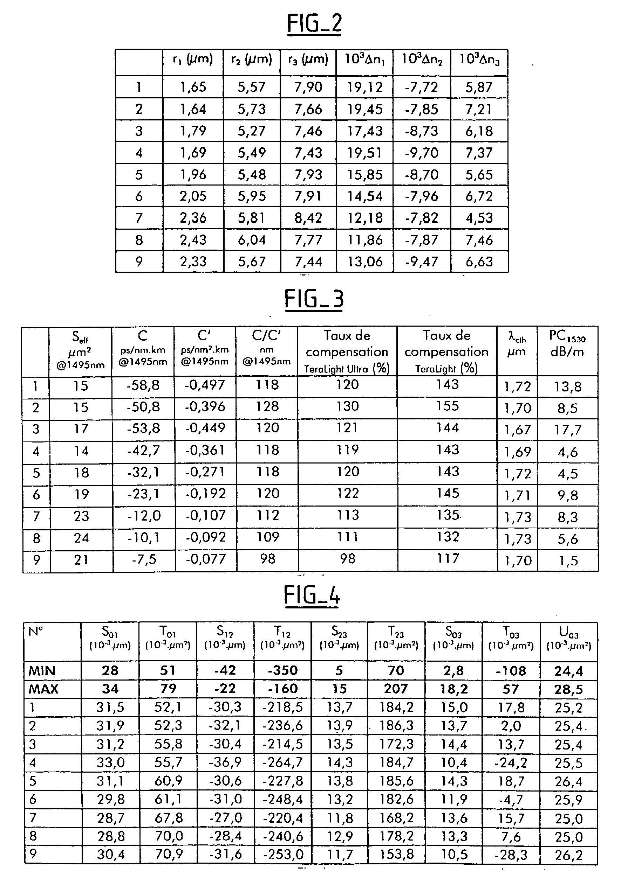

La figure 2 représente un tableau comprenant les valeurs de rayons et de différences d'indice pour une dizaine d'exemples de profils à trois tranches d'une fibre optique à compensation de dispersion chromatique selon l'invention. La colonne de gauche comprend la dénomination des exemples du n°1 au n°9. Les trois colonnes suivantes expriment en $\mu$m des rayons du profil d'indice variable de coeur. Les trois dernières colonnes expriment mille fois des différences d'indice (sans unité).

La figure 3 représente un tableau comprenant certaines caractéristiques des profils de fibre optique à compensation de dispersion chromatique selon l'invention définis à la figure 2. La colonne de gauche comprend la dénomination des exemples du n°1 au n°9. Pour chaque exemple considéré, les autres colonnes représentent des caractéristiques de la fibre optique correspondant à l'exemple considéré. La colonne suivante représente la surface effective Seff exprimée en $\mu$m$^2$ à la longueur d'onde de 1495nm. La colonne suivante représente la dispersion chromatique C exprimée en ps/nm.km à une longueur d'onde valant 1495nm. La colonne suivante représente la pente de dispersion chromatique C' exprimée en ps/nm$^2$.km à une longueur d'onde valant 1495nm. La colonne suivante représente le rapport dispersion chromatique C sur pente de dispersion chromatique C' exprimée en nm à une longueur d'onde valant 1495nm. La colonne suivante représente le taux de compensation exprimée en %, pour la fibre optique de ligne vendue sous la marque « TERALIGHT ULTRA ». La colonne suivante représente le taux de compensation exprimée en %, pour la fibre optique de ligne vendue sous la marque « TERALIGHT ». La colonne suivante représente la longueur de coupure théorique $\lambda_{cth}$ exprimée en nm. La dernière colonne représente des pertes par courbure exprimées en dB/m à la longueur d'onde de 1530nm, pour un enroulement autour d'un rayon de 10mm.

La figure 4 représente un tableau comprenant d'autres caractéristiques des profils de fibre optique à compensation de dispersion chromatique selon l'invention définis à la figure 2. La colonne de gauche comprend la dénomination des exemples du n°1 au n°9. Pour chaque exemple considéré, les autres colonnes représentent des caractéristiques de la fibre optique correspondant à l'exemple considéré. La colonne de gauche comprend également des dénominations MIN et MAX correspondant dans les colonnes suivantes respectivement à un minimum et à un maximum préférentiel pour la valeur de la caractéristique considérée. Pour chaque colonne, la première ligne comprenant une valeur numérique correspond à une valeur minimale préférentielle, la deuxième ligne comprenant une valeur numérique correspondant à une valeur maximale préférentielle, et les lignes suivantes comprenant des valeurs numériques correspondant aux valeurs réelles pour les examples n°1 à n°9. La colonne suivante représente la valeur de $S_{01}$ exprimées en millièmes de $\mu$m. La colonne suivante représente la valeur de $T_{01}$ exprimées en millièmes de $\mu$m$^2$. La colonne suivante représente la valeur de $S_{12}$ exprimées en millièmes de $\mu$m. La colonne suivante représente la valeur de $T_{12}$ exprimées en millièmes de $\mu$m$^2$. La colonne suivante représente la valeur de $S_{23}$ exprimées en millièmes de $\mu$m. La colonne suivante représente la valeur de $T_{23}$ exprimées en millièmes de $\mu$m$^2$. La colonne suivante représente la valeur de $S_{03}$ exprimées en millièmes de $\mu$m. La colonne suivante représente la valeur de $T_{03}$ exprimées en millièmes de $\mu$m$^2$. La dernière colonne représente la valeur de $U_{03}$ exprimées en millièmes de $\mu$m$^2$.

**Revendications**

1. Fibre optique à compensation de dispersion chromatique dans la bande S s'étendant de 1460nm à 1530nm,
   pour réseau de transmission à multiplexage en longueur d'onde,
   présentant une dispersion chromatique négative à la longueur d'onde de 1495nm,
   comportant successivement du centre vers la périphérie un coeur présentant un profil d'indice variable puis une gaine d'indice constant,
   le profil d'indice variable du coeur étant constitué successivement, du centre vers la périphérie,
   d'une tranche centrale d'indice maximum supérieur à l'indice de la gaine, d'une tranche enterrée d'indice minimum inférieur à l'indice de la gaine,
   d'une tranche annulaire d'indice maximum supérieur à l'indice de la gaine et inférieur à l'indice maximum de la tranche centrale,
   la différence ($\Delta n_1$) entre l'indice maximum de la tranche centrale et l'indice de la gaine étant comprise

entre $11,5 \times 10^{-3}$ et $20,0 \times 10^{-3}$,

le rayon ($r_1$) de la partie de la tranche centrale présentant un indice supérieur à l'indice de la gaine étant compris entre $1,6\mu m$ et $2,6\mu m$,

la différence ($\Delta n_2$) entre l'indice minimum de la tranche enterrée et l'indice de la gaine étant comprise entre $-10,0 \times 10^{-3}$ et $-7,0 \times 10^{-3}$,

le rayon extérieur ($r_2$) de la tranche enterrée étant compris entre $4,5\mu m$ et $6,5\mu m$,

la différence ($\Delta n_3$) entre l'indice maximum de la tranche annulaire et l'indice de la gaine étant comprise entre $1,0 \times 10^{-3}$ et $8,0 \times 10^{-3}$,

le rayon extérieur ($r_3$) de la tranche annulaire étant compris entre $7,3\mu m$ et $10,2\mu m$,

la valeur de l'intégrale

$$S_{01} = \int_0^{r_1} \Delta n(r).dr$$

entre un rayon nul et le rayon ($r_1$) de la partie de la tranche centrale présentant un indice supérieur à l'indice de la gaine, de la différence d'indice par rapport à la gaine, étant comprise entre $28 \times 10^{-3}\mu m$ et $34 \times 10^{-3}\mu m$,

**caractérisée en ce que**
la valeur de l'intégrale

$$S_{12} = \int_{r_1}^{r_2} \Delta n(r).dr$$

entre le rayon ($r_1$) de la partie de la tranche centrale présentant un indice supérieur à l'indice de la gaine et le rayon ($r_2$) de la partie de la tranche enterrée présentant un indice inférieur à l'indice de la gaine, de la différence d'indice par rapport à la gaine, est comprise entre $-42 \times 10^{-3}\mu m$ et $-22 \times 10^{=3}\mu m$,

les rayons et les indices de chacune des tranches étant déterminés de manière à ce que la fibre optique à compensation de dispersion présente, à la longueur d'onde de 1495nm, un rapport dispersion chromatique sur pente de dispersion chromatique dont la valeur absolue est comprise entre 68nm et 158nm.

2. Fibre optique à compensation de dispersion chromatique dans la bande S selon la revendication 1, **caractérisée en ce que** la valeur du double de l'intégrale

$$T_{01} = 2.\int_0^{r_1} \Delta n(r).r.dr$$

entre un rayon nul et le rayon ($r_1$) de la partie de la tranche centrale présentant un indice supérieur à l'indice de la gaine, du produit de la différence d'indice par rapport à la gaine par le rayon, est comprise entre $51 \times 10^{-3}\mu m^2$ et $79 \times 10^{-3}\mu m^2$

3. Fibre optique à compensation de dispersion chromatique dans la bande S selon la revendication 1 ou 2, **caractérisée en ce que** la valeur du double de l'intégrale

$$T_{12} = 2.\int_{r_1}^{r_2} \Delta n(r).r.dr$$

entre le rayon ($r_1$) de la partie de la tranche centrale présentant un indice supérieur à l'indice de la gaine et le rayon ($r_2$) de la partie de la tranche enterrée présentant un indice inférieur à l'indice de la gaine, du produit du rayon par la différence d'indice par rapport à la gaine, est comprise entre $-350 \times 10^{-3}\mu m^2$ et $-160 \times 10^{-3}\mu m^2$.

4. Fibre optique à compensation de dispersion chromatique dans la bande S selon l'une quelquonque des revendications précédentes, **caractérisée en ce que** la valeur de l'intégrale

$$S_{23} = \int_{r_2}^{r_3} \Delta n(r).dr$$

entre le rayon ($r_2$) de la partie de la tranche enterrée présentant un indice inférieur à l'indice de la gaine et le rayon ($r_3$) de la partie de la tranche annulaire présentant un indice supérieur à l'indice de la gaine, de la différence d'indice par rapport à la gaine, est comprise entre $5 \times 10^{-3}\mu m$ et $15 \times 10^{-3}\mu m$.

5. Fibre optique à compensation de dispersion chromatique dans la bande S selon l'une quelquonque des revendications précédentes, **caractérisée en ce que** la valeur du double de l'intégrale

$$T_{23} = 2 . \int_{r_2}^{r_3} \Delta n(r) . r . dr$$

entre le rayon ($r_2$) de la partie de la tranche enterrée présentant un indice inférieur à l'indice de la gaine et le rayon ($r_3$) de la partie de la tranche annulaire présentant un indice supérieur à l'indice de la gaine, du produit du rayon par la différence d'indice par rapport à la gaine, est comprise entre $70 \times 10^{-3} \mu m^2$ et $207 \times 10^{-3} \mu m^2$.

6. Fibre optique à compensation de dispersion chromatique dans la bande S selon l'une quelquonque des revendications précédentes, **caractérisée en ce que** la valeur de l'intégrale

$$S_{03} = \int_{0}^{r_3} \Delta n(r) . dr$$

entre un rayon nul et le rayon ($r_3$) de la partie de la tranche annulaire présentant un indice supérieur à l'indice de la gaine, de la différence d'indice par rapport à la gaine, est comprise entre $2,8 \times 10^{-3} \mu m$ et $18,2 \times 10^{-3} \mu m$.

7. Fibre optique à compensation de dispersion chromatique dans la bande S selon l'une quelquonque des revendications précédentes, **caractérisée en ce que** la valeur du double de l'intégrale

$$T_{03} = 2 . \int_{0}^{r_3} \Delta n(r) . r . dr$$

entre un rayon nul et le rayon ($r_3$) de la partie de la tranche annulaire présentant un indice supérieur à l'indice de la gaine, du produit du rayon par la différence d'indice par rapport à la gaine, est comprise entre $-108 \times 10^{-3} \mu m^2$ et $57 \times 10^{-3} \mu m^2$.

8. Fibre optique à compensation de dispersion chromatique dans la bande S selon l'une quelquonque des revendications précédentes, **caractérisée en ce que** la valeur du double de l'intégrale

$$U_{03} = 2 . \int_{0}^{r_3} \Delta n(r) . \exp\left(\frac{-r^2}{a^2}\right) . r . dr$$

entre un rayon nul et le rayon ($r_3$) de la partie de la tranche annulaire présentant un indice supérieur à l'indice de la gaine, du produit du rayon par la différence d'indice par rapport à la gaine par la fonction $\exp(-r^2/a^2)$, avec $a = 1,58 \mu m$, est comprise entre $24,4 \times 10^{-3} \mu m^2$ et $28,5 \times 10^{-3} \mu m^2$.

9. Fibre optique à compensation de dispersion chromatique dans la bande S selon l'une quelquonque des revendications [précédentes, **caractérisée en ce que** les rayons et les indices de chacune des tranches sont déterminés de manière à ce que la fibre optique à compensation de dispersion présente, à la longueur d'onde de 1495nm, un rapport dispersion chromatique sur pente de dispersion chromatique dont la valeur absolue est comprise entre 80nm et 118nm.

10. Fibre optique à compensation de dispersion chromatique dans la bande S selon la revendication 9, **caractérisée en ce que** les rayons et les indices de chacune des tranches sont déterminés de manière à ce que la fibre optique à compensation de dispersion présente, à la longueur d'onde de 1495nm, un rapport dispersion chromatique sur pente de dispersion chromatique dont la valeur absolue est comprise entre 87nm et 105nm.

11. Fibre optique à compensation de dispersion chromatique dans la bande S selon l'une quelquonque des revendications précédentes, **caractérisée en ce que** la valeur absolue de l'indice minimum de la tranche enterrée étant supérieure ou égale à 60% de la valeur absolue de l'indice maximum de la tranche centrale.

12. Fibre optique à compensation de dispersion chromatique dans la bande S, selon la revendication 11, **caractérisée en ce que** la valeur absolue de l'indice minimum de la tranche enterrée étant inférieure ou égale à 90% de la valeur absolue de l'indice maximum de la tranche centrale.

13. Système de transmission à fibre optique comprenant l'association d'une fibre optique de ligne et d'une fibre optique à compensation de dispersion chromatique dans la bande S selon l'une quelconque des revendications précédentes, la fibre optique à compensation de dispersion étant en ligne.

14. Système de transmission à fibre optique comprenant l'association d'une fibre optique de ligne et d'une fibre optique à compensation de dispersion dans la bande S selon l'une quelconque des revendications 1 à 14, la fibre optique à compensation de dispersion étant en module.

# FIG_1

## FIG_2

|   | $r_1$ (µm) | $r_2$ (µm) | $r_3$ (µm) | $10^3 \Delta n_1$ | $10^3 \Delta n_2$ | $10^3 \Delta n_3$ |
|---|---|---|---|---|---|---|
| 1 | 1,65 | 5,57 | 7,90 | 19,12 | -7,72 | 5,87 |
| 2 | 1,64 | 5,73 | 7,66 | 19,45 | -7,85 | 7,21 |
| 3 | 1,79 | 5,27 | 7,46 | 17,43 | -8,73 | 6,18 |
| 4 | 1,69 | 5,49 | 7,43 | 19,51 | -9,70 | 7,37 |
| 5 | 1,96 | 5,48 | 7,93 | 15,85 | -8,70 | 5,65 |
| 6 | 2,05 | 5,95 | 7,91 | 14,54 | -7,96 | 6,72 |
| 7 | 2,36 | 5,81 | 8,42 | 12,18 | -7,82 | 4,53 |
| 8 | 2,43 | 6,04 | 7,77 | 11,86 | -7,87 | 7,46 |
| 9 | 2,33 | 5,67 | 7,44 | 13,06 | -9,47 | 6,63 |

## FIG_3

|   | $S_{eff}$ µm² @1495nm | C ps/nm.km @1495nm | C' ps/nm².km @1495nm | C/C' nm @1495nm | Taux de compensation TeraLight Ultra (%) | Taux de compensation TeraLight (%) | $\lambda_{cth}$ µm | $PC_{1530}$ dB/m |
|---|---|---|---|---|---|---|---|---|
| 1 | 15 | -58,8 | -0,497 | 118 | 120 | 143 | 1,72 | 13,8 |
| 2 | 15 | -50,8 | -0,396 | 128 | 130 | 155 | 1,70 | 8,5 |
| 3 | 17 | -53,8 | -0,449 | 120 | 121 | 144 | 1,67 | 17,7 |
| 4 | 14 | -42,7 | -0,361 | 118 | 119 | 143 | 1,69 | 4,6 |
| 5 | 18 | -32,1 | -0,271 | 118 | 120 | 143 | 1,72 | 4,5 |
| 6 | 19 | -23,1 | -0,192 | 120 | 122 | 145 | 1,71 | 9,8 |
| 7 | 23 | -12,0 | -0,107 | 112 | 113 | 135. | 1,73 | 8,3 |
| 8 | 24 | -10,1 | -0,092 | 109 | 111 | 132 | 1,73 | 5,6 |
| 9 | 21 | -7,5 | -0,077 | 98 | 98 | 117 | 1,70 | 1,5 |

## FIG_4

| N° | $S_{01}$ ($10^{-3}$.µm) | $T_{01}$ ($10^{-3}$.µm²) | $S_{12}$ ($10^{-3}$.µm) | $T_{12}$ ($10^{-3}$.µm²) | $S_{23}$ ($10^{-3}$.µm) | $T_{23}$ ($10^{-3}$.µm²) | $S_{03}$ ($10^{-3}$.µm) | $T_{03}$ ($10^{-3}$.µm²) | $U_{03}$ ($10^{-3}$.µm²) |
|---|---|---|---|---|---|---|---|---|---|
| MIN | 28 | 51 | -42 | -350 | 5 | 70 | 2,8 | -108 | 24,4 |
| MAX | 34 | 79 | -22 | -160 | 15 | 207 | 18,2 | 57 | 28,5 |
| 1 | 31,5 | 52,1 | -30,3 | -218,5 | 13,7 | 184,2 | 15,0 | 17,8 | 25,2 |
| 2 | 31,9 | 52,3 | -32,1 | -236,6 | 13,9 | 186,3 | 13,7 | 2,0 | 25,4. |
| 3 | 31,2 | 55,8 | -30,4 | -214,5 | 13,5 | 172,3 | 14,4 | 13,7 | 25,4 |
| 4 | 33,0 | 55,7 | -36,9 | -264,7 | 14,3 | 184,7 | 10,4 | -24,2 | 25,5 |
| 5 | 31,1 | 60,9 | -30,6 | -227,8 | 13,8 | 185,6 | 14,3 | 18,7 | 26,4 |
| 6 | 29,8 | 61,1 | -31,0 | -248,4 | 13,2 | 182,6 | 11,9 | -4,7 | 25,9 |
| 7 | 28,7 | 67,8 | -27,0 | -220,4 | 11,8 | 168,2 | 13,6 | 15,7 | 25,0 |
| 8 | 28,8 | 70,0 | -28,4 | -240,6 | 12,9 | 178,2 | 13,3 | 7,6 | 25,0 |
| 9 | 30,4 | 70,9 | -31,6 | -253,0 | 11,7 | 153,8 | 10,5 | -28,3 | 26,2 |

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1219986 A
- US 20020067903 A